# FASCICULE DE BREVET EUROPEEN

(11) **EP 0 891 703 B1**
(45) Date de publication et mention de la délivrance du brevet: **09.10.2002**
(21) Numéro de dépôt: 98440151.3
(22) Date de dépôt: 03.07.1998
(51) Int. Cl.: A01K 5/00, A01F 29/00

(54) **Machine de préparation et de distribution d'aliments pour le bétail**
Vorrichtung zur Aufbereitung und Verteilung von Viehfutter
Device for preparing and distributing animal fodder

(30) Priorité: 18.07.1997 FR 9709322
(43) Date de publication de la demande: 20.01.1999
(73) Titulaire: Kuhn-Audureau S.A., 85260 La Copechagniere (FR)
(72) Inventeur: Vallat, Didier, 85000 La Roche Sur Yon (FR); Rostoucher, Guy, 85170 Belleville Sur Vie (FR)
(74) Mandataire: Andres, Jean-Claude

(56) Documents cités:
- EP-A- 0 352 670
- WO-A-97/17841

## Description

La présente invention se rapporte à une machine de préparation et de distribution d'aliments pour le bétail. Cette machine comprend notamment un châssis, une cuve qui est montée sur ledit châssis et qui est formée par au moins un plancher, deux parois latérales, une paroi avant et une paroi arrière définissant un volume pouvant être rempli d'aliments, des moyens de déchiquetage et de mixage qui se situent dans la cuve, lesquels moyens sont constitués par au moins deux vis sensiblement horizontales qui sont logées dans le fond de la cuve, qui sont entraînées en rotation en sens inverses et qui sont munies de filets ou de pales à sens d'enroulement contraires de manière à déplacer les aliments des parois avant et arrière vers le milieu de la cuve et par au moins un contre-couteau situé entre lesdites vis et s'étendant sur au moins une partie de leur longueur.

Les machines de ce genre sont utilisées pour mélanger différentes sortes d'aliments humides ou secs, durs ou pâteux, en brins longs ou courts, en vrac ou compacts, en vue d'obtenir une structure homogène pouvant ensuite être distribuée aux animaux. Sur ces machines, les aliments sont généralement introduits dans la cuve par le haut Ils sont alors déchiquetés par les vis situées dans le fond de la cuve et déplacés par celles-ci vers le milieu de ladite cuve. La force exercée par la rencontre au milieu des deux masses fait remonter la matière le long des parois latérales. Elle retombe ensuite par gravité vers l'avant et l'arrière de la cuve et est reprise par les vis. Après plusieurs passages on devrait obtenir un mélange dont la composition est parfaitement uniforme.

De telles machines sont par exemple connues des demandes de brevet WO-9717841 et EP-0352670.

Toutefois, l'entrée des aliments dans les vis s'effectuant pratiquement de la même manière sur toute la longueur des vis, il arrive fréquemment que certains aliments, par exemple ceux qui sont plus lourds, ne suivent pas la trajectoire normale et reviennent aux vis sans passer par les extrémités de la cuve. Cela nuit à la qualité du mélange et peut entrainer une mauvaise alimentation du bétail.

D'autre part, comme la densité de la matière augmente après chaque passage dans les vis, les déplacements dans la cuve deviennent plus lents. Ils peuvent même s'arrêter au niveau des parties supérieures des parois avant et arrière de la cuve. En conséquence, le mélange obtenu n'est pas homogène, d'autant plus qu'il n'est pas recommandé d'augmenter la durée de la phase de mélange afin de ne pas risquer un broyage trop important d'une partie des aliments.

La présente invention a pour but de remédier aux inconvénients précités. Elle doit notamment assurer une bonne circulation de tous les aliments afin d'améliorer l'homogénéité du mélange obtenu.

A cet effet, une importante caractéristique de l'invention consiste en ce que le contre-couteau présente un bord supérieur qui est incliné sur au moins une partie de sa longueur de sorte qu'il soit plus éloigné du plancher de la cuve au milieu de celle-ci que près de ses parois avant et arrière et par le fait que lesdites parois avant et arrière sont au moins en partie inclinées vers le milieu de la cuve.

Sur la machine selon l'invention le contre-couteau favorise, en raison de sa position, l'engagement des aliments dans les vis aux deux extrémités de celles-ci. Par contre, il freine en quelque sorte leur engagement dans lesdites vis dans les parties centrales de celles-ci. On obtient ainsi une régulation de la prise de la matière par les vis. Ceci favorise le flux de l'ensemble des aliments dans la partie haute de la cuve du milieu de celle-ci jusqu'à ses deux extrémités. De cette façon les aliments se mélangent d'une manière optimale.

En sus, lorsque les aliments en mouvement rencontrent les parties inclinées des parois avant et arrière de la cuve, leur déplacement est accéléré car l'une des forces est dirigée vers le bas. La vitesse de déplacement est ainsi maintenue durant toute la phase de préparation des aliments.

Selon une autre caractéristique de l'invention, le contre-couteau est réalisé en plusieurs segments. La position dans le sens de la hauteur de ces segments peut être réglable. Ceci permet notamment de moduler l'entrée des aliments dans les vis en fonction de leur nature.

Les parois avant et arrière de la cuve peuvent être partiellement inclinées vers le milieu et former des angles d'environ 30° avec la verticale. Lesdits angles peuvent être réglables de manière à pouvoir adapter la position des parois à la nature des aliments chargés dans la cuve.

D'autres caractéristiques et avantages de l'invention ressortiront de la description ci-après d'un exemple de réalisation non limitatif de l'invention, avec référence aux dessins annexés dans lesquels :
- la figure 1 représente une coupe longitudinale d'une machine selon l'invention ;
- la figure 2 représente une coupe transversale de cette machine.

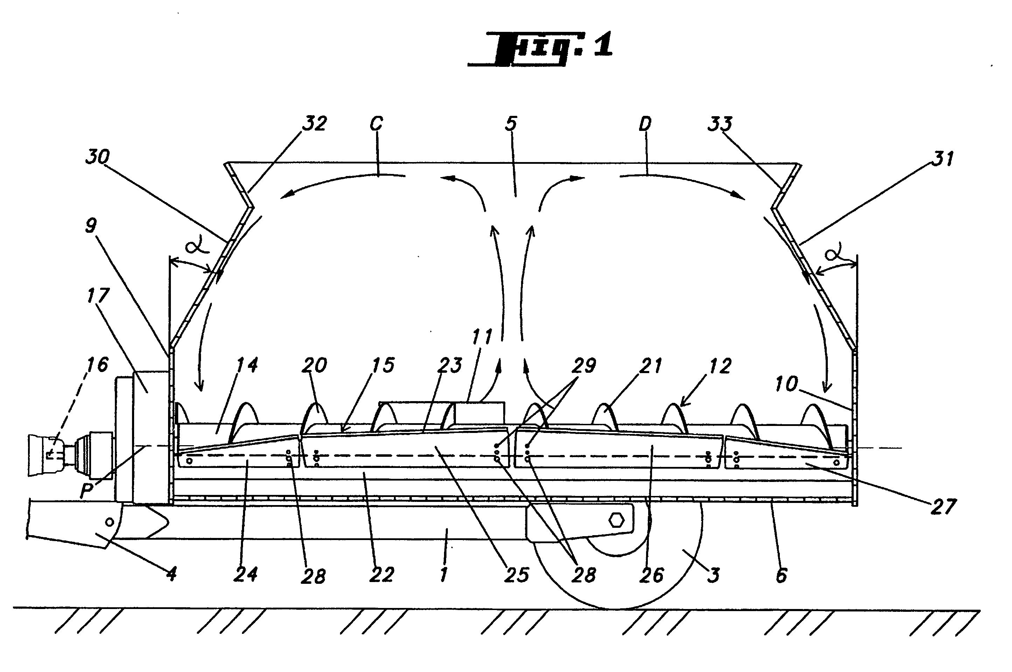

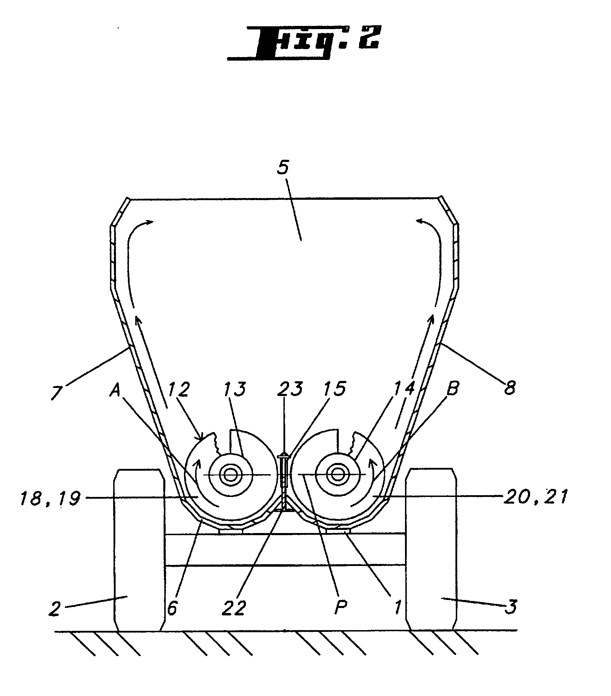

Telle qu'elle est représentée sur les figures 1 et 2 annexées, la machine selon l'invention comprend un châssis (1). Celui-ci est muni de roues (2 et 3) et d'un timon (4) pour l'accrochage à un tracteur non représenté. Sur ledit châssis (1) est montée une cuve (5) formée par au moins un plancher (6), deux parois latérales (7 et 8), une paroi avant (9) et une paroi arrière (10) définissant un volume qui peut être rempli d'aliments. Au moins une de ces parois (7 et 8) comporte une ouverture (11) dans la partie inférieure pour la sortie des aliments. Celle-ci peut être obturée par une porte. Dans le fond de la cuve (5) sont logés des moyens de déchiquetage et de mixage (12) des aliments. Ils sont constitués par deux vis (13 et 14) sensiblement horizontales et par au moins un contre-couteau (15) qui se situe entre lesdites vis (13 et 14).

Ces vis (13 et 14) sont montées dans des paliers des parois avant et arrière (9 et 10) de manière à pouvoir tourner. Elles peuvent être entraînées en rotation en sens inverses comme cela est indiqué par les flèches (A et B) sur la figure 2. Elles tournent alors en convergence vers le contre-couteau (15). Cet entraînement est assuré par des chaînes qui passent sur des roues solidaires des vis (13 et 14) et une roue motrice qui est solidaire d'un arbre (16) pouvant être relié à un arbre de prise de force du tracteur. Les moyens d'entraînement des vis (13 et 14) peuvent aussi être constitués par des roues dentées qui engrènent. Ils sont logés dans un carter (17) situé contre le côté extérieur de la paroi avant (9) de la cuve (5).

Chaque vis (13 et 14) est munie de filets (18 et 19, 20 et 21) à sens d'enroulement contraires, de manière à déplacer les aliments de leurs extrémités avant et arrière vers le milieu.

Les deux filets (18 et 19, 20 et 21) de chaque vis (13 et 14) peuvent avoir des longueurs identiques ou légèrement différentes. Les filets (18 à 21) peuvent être remplacés par des pales orientées de la même manière. Ils peuvent être équipés à leur périphérie de couteaux ou de pièces analogues.

Le contre-couteau (15) s'étend sensiblement sur toute la longueur des vis (13 et 14) ou sur une importante partie de leur longueur. Il peut être réalisé en une pièce ou en plusieurs segments (24 à 27). Il est fixé sur un talon (22) qui est solidaire du plancher (6) de la cuve (5). Comme cela ressort de la figure 1, ce contre-couteau (15) présente un bord supérieur (23) qui est incliné sur au moins une partie de sa longueur de sorte qu'il soit plus éloigné du plancher (6) de la cuve (5) vers le milieu de celle-ci que près de ses parois avant et arrière (9 et 10). De préférence, ledit bord supérieur (23) se situe en dessous d'un plan (P) passant par les axes de rotation des vis (13 et 14) au voisinage des parois avant et arrière (9 et 10) de la cuve (5) et au-dessus dudit plan (P) dans la partie centrale de la cuve (5).

La position dans le sens de la hauteur du contre-couteau (15) est avantageusement réglable. Ceci permet d'adapter sa position par rapport aux vis (13 et 14) suivant la nature des aliments chargés dans la cuve (5). En vue de ce réglage, on peut modifier la position du contre-couteau (15) sur le talon (22) ou bien modifier la position de ce dernier en le faisant pénétrer plus ou moins haut dans la cuve (5).

Comme cela est représenté sur la figure 1, les segments (24 à 27) se situent dans le prolongement les uns des autres. De tels segments sont plus faciles à réaliser. Ils ont la forme d'un U, ce qui permet de leur faire chevaucher le talon (22) de la cuve (5) (voir figure 2). Leur bord supérieur (23) peut être dentelé. La largeur dudit bord peut également varier. Chaque segment (24 à 27) est fixé sur le talon (22) avec des boulons (28) traversant. Ils comportent plusieurs trous de passage (29), situés les uns au-dessus des autres, pour lesdits boulons (28). Chacun peut ainsi être fixé dans différentes positions dans le sens de la hauteur. Il est ainsi possible de modifier la position et/ou l'inclinaison de leur bord supérieur (23) par rapport au plancher (6).

Les parois avant et arrière (9 et 10) de la cuve (5) comportent au-dessus des vis (13 et 14) des parties (30 et 31) inclinées vers le milieu de la cuve (5). Ces parties inclinées (30 et 31) forment des angles (α) d'environ 30° avec la verticale. Selon un mode de réalisation qui n'est pas représenté, chaque partie inclinée (30 et 31) est liée à la partie restante de la paroi avant (9) ou arrière (10) au moyen d'une charnière. Cela permet de régler l'inclinaison des parties (30 et 31) selon les besoins.

Ces parois avant et arrière (9 et 10) comportent des bords supérieurs (32 et 33) qui sont dirigés vers l'extérieur. Ces bords (32 et 33) évasés favorisent l'introduction des aliments par le haut dans la cuve (5).

Pour nourrir le bétail, l'utilisateur charge les divers aliments dans la cuve (5) par le haut. Ensuite, il fait tourner les vis (13 et 14) dans le sens des flèches (A et B) pour obtenir un broyage et un mélange de ces aliments. Durant cette opération, les aliments s'engagent dans les vis (13 et 14) essentiellement près des extrémités avant et arrière de celles-ci. Ils sont ensuite déplacés par les filets (18 à 21) vers le milieu de la cuve (5). Lors de chaque passage entre les vis (13 et 14) et le contre-couteau (15) les aliments sont coupés afin d'obtenir des brins ou des morceaux de taille relativement uniforme.

Dans les parties centrales des vis (13 et 14) les aliments qui sont acheminés de l'avant au moyen des filets (18 et 20) et de l'arrière au moyen des filets (19 et 21) se rencontrent et remontent le long des parois latérales (7 et 8). Ensuite, ils sont à nouveau poussés vers le côté avant et vers le côté arrière de la cuve (5) par la masse d'aliments qui suit. Lorsqu'ils rencontrent les parties inclinées (30 et 31) des parois avant et arrière (9 et 10) de la cuve (5), ils sont poussés vers le bas et reviennent jusqu'aux vis (13 et 14). Il est à noter que dans toute la partie centrale de la cuve (5) le contre-couteau (15) évite également que les aliments, en particulier les plus lourds, ne reviennent tout de suite dans les vis (13 et 14).

Les aliments décrivent alors les trajectoires indiquées par les flèches (C et D) sur la figure 1. Celles-ci permettent d'obtenir un mélange parfaitement homogène. L'utilisateur peut ensuite amener la machine sur l'aire d'affouragement et distribuer la nourriture aux animaux en la faisant sortir par l'orifice (11).

Il est bien évident que l'invention n'est pas limitée au mode de réalisation décrit et représenté sur les dessins annexés. Des modifications restent possibles, notamment en ce qui concerne la constitution des divers éléments ou par substitution d'équivalents techniques, sans sortir pour autant du domaine de protection.

## Revendications

1. Machine de préparation et de distribution d'aliments pour le bétail, comprenant notamment un châssis (1), une cuve (5) qui est montée sur ledit châssis (1) et qui est formée par au moins un plancher (6), deux parois latérales (7 et 8), une paroi avant (9) et une paroi arrière (10) définissant un volume pouvant être rempli d'aliments, des moyens de déchiquetage et de mixage (12) qui se situent dans la cuve (5), lesquels moyens (12) sont constitués par au moins deux vis (13 et 14) sensiblement horizontales qui sont logées dans le fond de la cuve (5), qui sont entraînées en rotation en sens inverses et qui sont munies de filets (18 à 21) ou de pales à sens d'enroulement contraires de manière à déplacer les aliments des parois avant et arrière (9 et 10) vers le milieu de la cuve (5) et par au moins un contre-couteau (15) situé entre lesdites vis (13 et 14) et s'étendant sur au moins une partie de leur longueur, ***caractérisée par le fait* que** le contre-couteau (15) présente un bord supérieur (23) qui est incliné sur au moins une partie de sa longueur de sorte qu'il soit plus éloigné du plancher (6) de la cuve (5) au milieu de celle-ci que près de ses parois avant et arrière (9 et 10) et **par le fait que** lesdites parois avant et arrière (9 et 10) sont au moins en partie inclinées vers le milieu de la cuve (5).

2. Machine selon la revendication 1, ***caractérisée par le fait* que** près des parois avant et arrière (9 et 10) de la cuve (5) le bord supérieur (23) du contre-couteau (15) se situe en-dessous d'un plan (P) passant par les axes de rotation des vis (13 et 14) et qu'au milieu de la cuve (5) ledit bord supérieur (23) se situe au-dessus du plan (P) passant par les axes de rotation des vis (13 et 14).

3. Machine selon la revendication 1 ou 2, ***caractérisée par le fait* que** la position dans le sens de la hauteur du contre-couteau (15) est réglable.

4. Machine selon l'une des revendications 1 à 3, ***caractérisée par le fait* que** le contre-couteau (15) est réalisé en plusieurs segments (24 à 27) qui se situent dans le prolongement les uns des autres.

5. Machine selon la revendication 4, ***caractérisée par le fait* que** la position dans le sens de la hauteur et/ou l'inclinaison de chaque segment (24 à 27) est réglable.

6. Machine selon la revendication 5, ***caractérisée par le fait* que** chaque segment (24 à 27) du contre-couteau (15) est en forme de U.

7. Machine selon la revendication 5 ou 6, ***caractérisée par le fait* que** chaque segment (24 à 27) du contre-couteau (15) comporte plusieurs trous de fixation (29).

8. Machine selon la revendication 1, ***caractérisée par le fait* que** la paroi avant (9) et la paroi arrière (10) de la cuve (5) comportent des parties inclinées (30 et 31) formant des angles (α) d'environ 30° avec la verticale.

9. Machine selon la revendication 8, ***caracterisée par le fait* que** la position des parties inclinées (30 et 31) des parois avant et arrière (9 et 10) de la cuve (5) est réglable.

10. Machine selon l'une quelconque des revendications 1, 8 ou 9, ***caractérisée par le fait* que** les parois avant et arrière (9 et 10) de la cuve (5) comportent des bords supérieurs (32 et 33) dirigés vers l'extérieur pour favoriser l'introduction des aliments.

## Claims

1. Machine for preparing and distributing cattle feed comprising, in particular, a chassis (1), a tank (5) which is mounted on the said chassis (1) and which is formed of at least a floor (6), two side walls (7 and 8), a front wall (9) and a rear wall (10) defining a volume which can be filled with feed, shredding and mixing means (12) which are located in the tank (5), which means (12) consist of at least two substantially horizontal augers (13 and 14) which are housed in the bottom of the tank (5), and driven in rotation in opposite directions and which have threads (18 to 21) or blades of opposite winding directions so as to move the feed from the front and rear walls (9 and 10) towards the middle of the tank (5), and of at least one counter-knife (15) situated between the said augers (13 and 14) and extending over at least part of their length, ***characterized in* that** the counter-knife (15) has an upper edge (23) which is inclined over at least part of its length so that it is further away from the floor (6) of the tank (5) at the middle of the latter than it is near its front and rear walls (9 and 10), and **in that** the said front and rear walls (9 and 10) are at least partially inclined towards the middle of the tank (5).

2. Machine according to Claim 1, ***characterized in* that** near the front and rear walls (9 and 10) of the tank (5), the upper edge (23) of the counter-knife (15) is situated beneath a plane (P) passing through the axes of rotation of the augers (13 and 14) and that, at the middle of the tank (5), the said upper edge (23) is situated above the plane (P) passing through the axes of rotation of the augers (13 and 14).

3. Machine according to Claim 1 or 2, ***characterized in* that** the position of the counter-knife (15) in the heightwise direction is adjustable.

4. Machine according to one of Claims 1 to 3, ***characterized in* that** the counter-knife (15) is made in several segments (24 to 27) which lie in the continuation of one another.

5. Machine according to Claim 4, ***characterized in* that** the position of each segment (24 to 27) in the heightwise direction and/or its inclination is/are adjustable.

6. Machine according to Claim 5, ***characterized in* that** each segment (24 to 27) of the counter-knife (15) is U-shaped.

7. Machine according to Claim 5 or 6, ***characterized in* that** each segment (24 to 27) of the counter-knife (15) comprises several fixing holes (29).

8. Machine according to Claim 1, ***characterized in* that** the front wall (9) and the rear wall (10) of the tank (5) have inclined parts (30 and 31) making angles (α) of substantially 30° with the vertical.

9. Machine according to Claim 8, ***characterized in* that** the position of the inclined parts (30 and 31) of the front and rear walls (9 and 10) of the tank (5) is adjustable.

10. Machine according to any one of Claims 1, 8 or 9, ***characterized in* that** the front and rear walls (9 and 10) of the tank (5) have upper edges (32 and 33) directed outwards to make it easier for the feed to be introduced.

## Patentansprüche

1. Maschine zur Aufbereitung und Verteilung von Viehfutter, mit insbesondere einem Rahmen (1), ein am Rahmen (1) angebrachter Behälter (5), der durch mindestens einen Boden (6), zwei Seitenwände (7 und 8), eine Vorderwand (9) und eine Hinterwand (10), die ein Volumen definieren, das mit Futter gefüllt werden kann, gebildet wird, und sich in dem Behälter (5) befindenden Zerkleinerungs- und Mischmitteln (12), die durch mindestens zwei im wesentlichen horizontale, im unteren Teil des Behälters (5) untergebrachte Mischschnecken (13 und 14), die in entgegengesetzte Richtungen drehangetrieben werden und mit Schneckenwindungen (18 bis 21) oder Schaufeln mit entgegengesetzten Windungsrichtungen versehen sind, um das Futter von der Vorder- und der Hinterwand (9 und 10) zur Mitte des Behälters (5) zu bewegen, und durch mindestens ein sich zwischen den Mischschnecken (13 und 14) befindendes und sich über mindestens einen Teil ihrer Länge erstreckendes Gegenmesser (15) gebildet werden, ***dadurch gekennzeichnet,* daß** das Gegenmesser (15) einen oberen Rand (23) aufweist, der über mindestens einen Teil seiner Länge so geneigt ist, daß er in der Mitte des Behälters (5) weiter vom Boden (6) des Behälters (5) entfernt ist als nahe seiner Vorder- und Hinterwand (9 und 10), und daß die Vorder- und die Hinterwand (9 und 10) zumindest teilweise zur Mitte des Behälters (5) geneigt sind.

2. Maschine nach Anspruch 1, ***dadurch gekennzeichnet,* daß** nahe der Vorderund der Hinterwand (9 und 10) des Behälters (5) der obere Rand (23) des Gegenmessers (15) sich unter einer durch die Drehachsen der Mischschnecken (13 und 14) verlaufenden Ebene (P) befindet und daß in der Mitte des Behälters (5) der obere Rand (23) sich über der durch die Drehachsen der Mischschnecken (13 und 14) verlaufenden Ebene (P) befindet.

3. Maschine nach Anspruch 1 oder 2, ***dadurch gekennzeichnet,* daß** die Position des Gegenmessers (15) in Höhenrichtung einstellbar ist.

4. Maschine nach einem der Ansprüche 1 bis 3, ***dadurch gekennzeichnet,* daß** das Gegenmesser (15) in mehrere Segmente (24 bis 27) ausgeführt ist, die sich in ihrer gegenseitigen Verlängerung befinden.

5. Maschine nach Anspruch 4, ***dadurch gekennzeichnet,* daß** die Position jedes Segments (24 bis 27) in Höhenrichtung und/oder ihre Neigung einstellbar ist.

6. Maschine nach Anspruch 5, ***dadurch gekennzeichnet,* daß** jedes Segment (24 bis 27) des Gegenmessers (15) U-förmig ist.

7. Maschine nach Anspruch 5 oder 6, ***dadurch gekennzeichnet,* daß** jedes Segment (24 bis 27) des Gegenmessers (15) mehrere Befestigungslöcher (29) enthält.

8. Maschine nach Anspruch 1, ***dadurch gekennzeichnet,* daß** die Vorderwand (9) und die Hinterwand (10) des Behälters (5) geneigte Teile (30 und 31) aufweisen, die mit der Vertikalen Winkel (α) von ca. 30° bilden.

9. Maschine nach Anspruch 8, ***dadurch gekennzeichnet,* daß** die Position der geneigten Teile (30 und 31) der Vorder- und der Hinterwand (9 und 10) des Behälters (5) einstellbar ist.

10. Maschine nach irgend einem der Ansprüche 1, 8 oder 9, ***dadurch gekennzeichnet,* daß** die Vorder- und die Hinterwand (9 und 10) des Behälters (5) obere Ränder (32 und 33) aufweisen, die zur Begünstigung der Einleitung des Futters nach außen gerichtet sind.
